# EUROPEAN PATENT SPECIFICATION

(11) **EP 1 412 161 B1**
(45) Date of publication and mention of the grant of the patent: **01.09.2010**
(21) Application number: 02735840.7
(22) Date of filing: 18.06.2002
(51) Int. Cl.: B29C 51/28, B29C 51/08

(54) **APPARATUS, FORMING MEANS AND METHODS FOR FORMING SHEET MATERIAL**
VORRICHTUNG, HERSTELLUNGSMITTEL UND VERFAHREN ZUR HERSTELLUNG VON FLÄCHIGEM MATERIAL
APPAREIL, MOYENS DE FORMATION ET PROCEDES PERMETTANT DE FORMER UN MATERIAU DE FEUILLE

(30) Priority: 19.06.2001 IT MO20010124; 06.06.2002 IT MO20020155
(43) Date of publication of application: 28.04.2004
(73) Proprietor: SARONG S.p.A., 42046 Reggiolo (IT)
(72) Inventor: BARTOLI, Andrea, I-42100 Reggio Emilia (IT)
(74) Representative: Crugnola, Pietro
(86) International application number: PCT/IB2002/002243
(87) International publication number: WO 2002/102573

(56) References cited:
- EP-A- 0 960 717
- FR-A- 2 614 768
- FR-A- 2 651 720
- GB-A- 2 092 941
- US-A- 2 422 998
- US-A- 3 614 811
- US-A- 4 242 172
- US-A- 4 313 899
- US-A- 5 108 532

## Description

The invention relates to forming means and methods for forming sheet material. Examples of sheet materials that can be formed using the forming means and the methods described below are materials based on natural fibres and plastic materials that can be used for containers for packaging in general, trays and cups for food products, blisters for pharmaceutical use and the like.

The materials based on natural fibres are materials obtained from wooden fibres, cellulose or other materials such as the prior-art material known by the trademark "mould paper". For environmental reasons, said materials are becoming popular with consumers and packaging professionals; due to their composition said material can in fact be more easily recycled or disposed of than the plastic materials traditionally used in packaging industry.

Sheet materials are currently formed according to two thermoforming techniques, namely the vertical forming technique and the horizontal forming technique.

In vertical forming machines two strips of sheet material, suitable for creating two opposite parts of the containers, are passed through one or more pre-heating stations that heat them to a temperature that is close to the softening temperature of the plastic of which they are made. Subsequently, at a sealing station the two strips are sealed along a preset profile corresponding to the edge of the container to be formed. This profile is interrupted at an opening through which, at one or more subsequent forming stations, pressurised air is injected suitable for inflating the sheet material, which thus dilates in order to deform according to the geometry of a mould within which the sheet material is inserted into the forming station.

The pressurised air that causes the sheet material to swell is injected through appropriate conduits, each conduit being bounded by a first wall, defined in a half-mould, and by a second wall defined in a second half-mould, said first half-mould and second half-mould being movable towards each other to close onto the sheet material.

The opening through which the pressurised air has been injected is subsequently used to fill the container formed with the material to be packaged, and is finally closed.

Machines of this type enable containers to be obtained that are particularly suitable for being filled with fluid or pasty products but are not suitable for the production of containers formed by a pair of shells that have to be associated to each other after an object, typically consisting of a solid product, has been placed between them.

Furthermore, as in this type of machine the forming action is performed only by the pressurised air that deforms the heated material, with this system only containers with a limited depth can be obtained because the action of the air on its own is not sufficient to deform the sheet material beyond a certain limit.

This drawback is particularly serious if the vertical forming machines are used to thermoform materials based on natural fibres, that have more limited stretching and deformability properties than plastic films. For this reason, containers in natural-fibre materials with extremely limited depths can be obtained with vertical forming machines.

According to the horizontal forming technique, a sheet material is pre-heated to a temperature that is near the softening temperature and, at a subsequent forming station, is shaped by means of a punch that is engaged in a matrix so as to form the sheet material according to the desired geometry. The mechanical action of forming by the punch and matrix is accompanied by the action of the pneumatic means that is suitable for ensuring that the sheet material adheres to the punch and matrix in a regular manner and without wrinkles.

The horizontal forming technique enables containers of significant depth to be obtained, but subjects the material to be formed to high stress, which is the greater the greater the set deformation.

It is difficult for sheet materials to bear this stress.

This drawback is particularly pronounced in the case of materials based on natural fibres, which tend to break, or to defibrate, under the combined action of the punch and matrix, such materials being, as already mentioned, less deformable and resilient than plastic films. US3614811, on which the preamble of claim 1 is based, discloses an apparatus and a method for forming articles, from a plastic sheet material. The apparatus comprises a die, an inner diaphragm, an outer diaphragm, a liquid and/or gas connection for supplying pressure fluid between a plate and the outer diaphragm so that the latter force the sheet material against the die.

EP0960717 discloses a hydroforming process and a platen for hydroforming sheets made of plastics or other kind of material. The platen consists of a large block with a resilient membrane applied thereupon. The resilient membrane, during the hydroforming process, assumes the profile of a mould supporting the sheet to be formed, owing to the action of oil pressure supplied into a cavity adjacent thereto. US5108532 discloses a method and an apparatus for shaping a workpiece including layers of thermoplastic or thermosetting composite material. The apparatus comprises an upper assembly and a lower assembly to which an upper diaphragm and a lower diaphragm of polyamide are respectively associated for receiving therebetween the workpiece to be shaped and formed. Means are also provided for applying high pressure to the upper diaphragm, and for applying vacuum pressure to the lower diaphragm for shaping and forming the workpiece into the final composite product.

US4313899 discloses a process for drawing a laminated paperboard into a container. The laminated paperboard, after being preheated and softened by warm water, passes through a die press comprising a male plunger and a female die that shape it for obtaining a tray.

GB2092941 discloses a method for deep drawing an insulating synthetic paper. The synthetic paper is immersed in water to allow it to be swollen so that the paper is capable of being stretched upon molding, and is placed in a deep drawing metal mold.

FR2614768 discloses a press for welding shoe soles. The press comprises a bell .which is equipped with a resilient membrane and which can be folded over the sole of the shoe during welding. The press further comprises means for applying the resilient membrane onto the sole owing to a fluid pressure.

An object of the invention is to improve the forming means and the prior-art methods for forming sheet material.

A further object of the invention is to provide forming means and methods for forming sheet material even according to complicated shapes that have significant depth, without subjecting the material to excessive mechanical stress.

A further object of the invention is to provide forming means and methods suitable for forming sheet material thereby obtaining qualitatively good results and limiting, or even eliminating, the risk of causing damage or breakages.

A still further object of the invention is to obtain forming means suitable for forming sheet materials that are constructionally simple and have significant effectiveness.

In a first aspect of the invention, forming means for shaping sheet material is provided, according to claim 1.

Advantageously, the membrane means is substantially impermeable to the fluid forming means.

Further advantageously, the membrane means is made from plastic material.

In a further preferred embodiment, the fluid forming means comprises a pneumatic forming means.

Owing to this aspect of the invention, it is possible to form relatively porous sheet material, such as materials based on natural fibres, thereby obtaining qualitatively good results, because the flow-inhibiting means allowing fluid forming means to be used which ensures that the sheet material adheres precisely to the mechanical forming means. This prevents the formation of wrinkles and other irregularities.

In one advantageous embodiment, the forming means comprises at least one body crossed by conduit means suitable for enabling the passage of the fluid forming means, said conduit means ending in opening means arranged at forming zone means of said at least one body, said forming zone means being associated with said membrane means, which can be deformed by said fluid forming means.

In a preferred embodiment, the conduit means is defined by walls that are fully contained in said at least one body.

In another preferred embodiment, said opening means faces said membrane means and faces the sheet material to be deformed.

In a further preferred embodiment, said at least one body comprises a first body in which hollow means is obtained inside which openings of said opening means are defined. Advantageously, said membrane means is fixed peripherally to the first body.

In a still another preferred embodiment, said at least one body comprises a further body in which cavity means is defined which acts as matrix means suitable for receiving the sheet material during forming.

Advantageously, inside the cavity means further openings of said opening means are obtained.

In a further preferred embodiment, the first body and the further body are movable towards and away from one another between a rest position, in which the first body and the further body are mutually spaced in such a way that the sheet material can be placed between them, and an operating position in which the first body and the further body come into contact with each other to close onto the sheet material.

When the first body and the further body are in the operating position the fluid forming means is injected through said openings and interacts with the membrane means to deform the sheet material.

Simultaneously, further fluid forming means is aspirated through further openings so as to be extracted from the cavity means.

In this way, the fluid forming means performs a dual forming action, on the one side it is pressurised and, through the membrane means, presses the sheet material inside the cavity means and on the other side it is aspirated to create a vacuum that attracts the sheet material towards the walls that define said cavity means.

In said manner, sheet materials can be advantageously formed that are porous and therefore permeable to the fluid forming means, such as for example, materials based on natural fibres. The membrane means, in fact, acts as a barrier to the fluid forming means: the fluid forming means in fact deforms the membrane means, which in turn deforms the sheet material.

Owing to this preferred embodiment of the invention, forming means for forming a sheet material can be obtained that enables containers of a given depth to be obtained even without the use of a deforming punch or of any mechanical forming means.

In this way the sheet material is subjected to more limited stress, which allows the risk of damage to or breakage of the sheet material to be drastically reduced.

In a third aspect of this invention, a method for forming sheet material, in particular sheet material based on natural fibres, is provided comprising in sequence dispensing deformability promoting means suitable for making said sheet material more easily deformable and shaping portions of said sheet material, **characterised in that** said dispensing deformability promoting means comprises dispensing deformability promoting material means.

In a preferred embodiment, said dispensing deformability promoting material means comprises dispensing liquid means, particularly water.

Owing to this aspect of the invention, it is possible to obtain a method for forming sheet materials even according to complicated shapes. In fact, the deformability promoting material means softens the sheet material and gives it such a plasticity that enables deformation thereof into a wide range of shapes, also comprising deep recesses, without damage and breakages.

In a preferred embodiment, said shaping comprises mechanically shaping the sheet material, using mechanical forming means.

In another preferred embodiment, said shaping comprises using fluid forming means, preferably pneumatic forming means.

In a further preferred embodiment, the method further comprises interposing between the fluid forming means and the sheet material flow-inhibiting means suitable for preventing the fluid forming means from flowing through said material. Advantageously, said interposing flow-inhibiting means comprises interposing membrane means.

Further advantageously, said shaping comprises deforming the membrane means through punch means, the membrane means wrapping at least one active surface of the punch means.

Owing to the membrane means, the sheet material, even if it is relatively porous, when subjected to the fluid forming means, adheres to the punch means, so preventing the formation of wrinkles or other defects and ensuring high-quality final results.

In a further preferred embodiment, the method further comprises evacuating the deformability promoting material means.

Advantageously, said evacuating comprises heating the sheet material, so as to evaporate the deformability promoting material means.

In this way, the sheet material can, after being deformed into the desired shape, regain its consistency and its physical and mechanical properties.

In a second aspect of the invention, a method for shaping sheet material is provided according to claim 22.

In another preferred embodiment, said forming comprises forming the sheet material through pneumatic forming means.

Owing to this aspect of the invention, and in particular owing to the interposing of the membrane means, it is possible to use fluid forming means to shape even relatively porous sheet material, the fluid forming means ensuring that the sheet material to be formed is arranged according to a regular configuration free of wrinkles.

High-quality final results can thus be obtained.

The invention may be better understood and carried out with reference to the accompanying drawings, which show some exemplifying and not limiting embodiments thereof, in which:
Figure 1 is a schematic front view of an apparatus for forming sheet material according to the invention;
Figure 2 is a schematic plan view of the apparatus in Figure
Figure 3 is a schematic and enlarged section of the forming means of the apparatus in Figure 1;
Figure 4 is a section taken along a vertical plane of forming means associated with still not deformed sheet material;
Figure 5 is a section like the one of Figure 4, showing the forming means during forming of the sheet material;
Figure 6 is a section like the one of Figure 4, showing a variation of the forming means arranged to simultaneously form a pair of sheet-material films;
Figure 7 is a plan view of a half-mould of a further variation of the forming means, in which a plurality of cavities is obtained suitable for forming respective container shells from a single film of sheet material;
Figure 8 is a plan view of a further half-mould, that can be associated with the half-mould of Figure 7, provided with deformable membrane means;
Figure 9 is a section taken along a horizontal plane of a still another variation of forming means;
Figure 10 is a section taken along a vertical plane of a preferred embodiment of the membrane means;
Figure 11 is a section like the one of Figure 10, showing a further preferred embodiment of the membrane means.

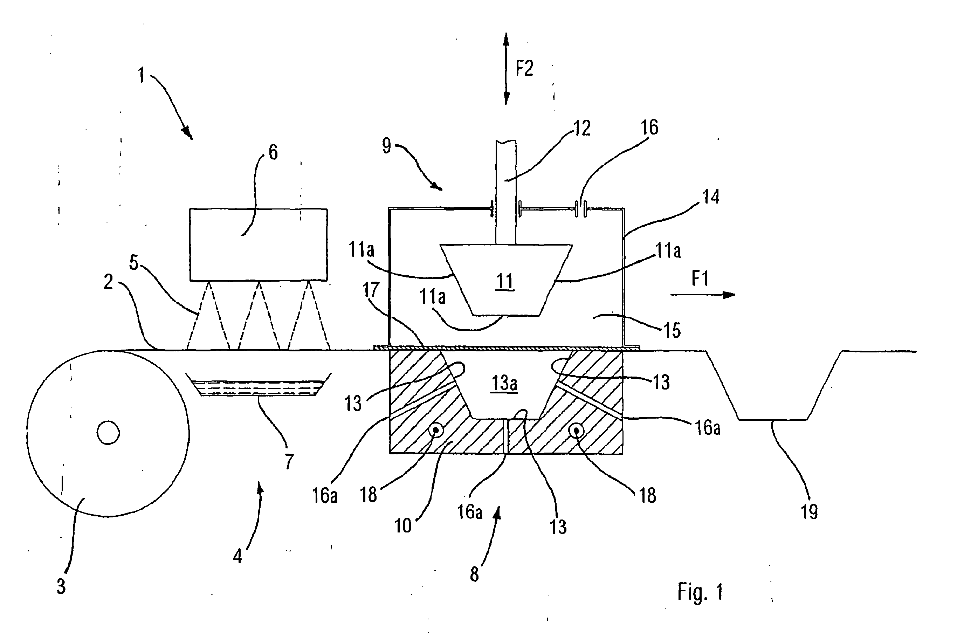

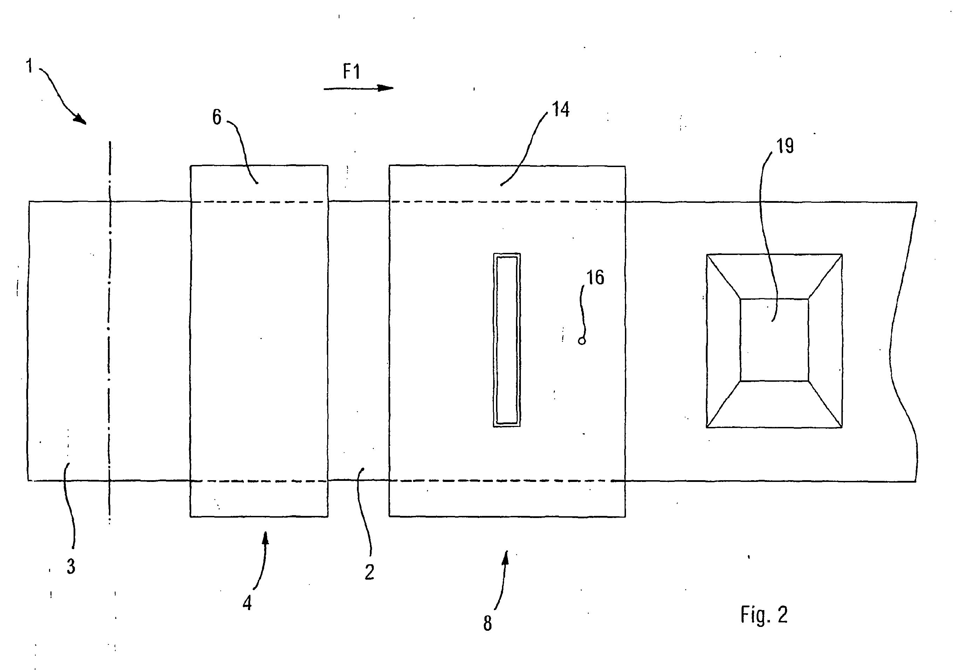

Figures 1 and 2 show an apparatus 1 for forming sheet material 2, for example, material based on natural fibres, unwound from a reel 3 by an unwinding means not shown and indexed in the direction indicated by arrow F1 along a conveying and processing line.

The sheet material 2 passes through a humidification station 4, in which it is humidified with a liquid substance 5 applied by means of a dispensing device 6 comprising, for example, a set of spray nozzles, the excesses of said liquid substance 5 being collected in a tray 7 positioned underneath the sheet material 2. As an alternative to the spray nozzles, the liquid substance 5 can be applied by any prior-art dispensing device, for example, by placing the sheet material 2 in an appropriate bath or by dampening it by means of sponge rollers impregnated with the liquid substance 5, or with something else.

Preferably, the liquid substance 5 mainly consists of water that penetrates the sheet material 2 and thereby acts as deformability promoting means, in other words softens the sheet material 2 by making pasty the fibres thereof so as to give the material 2 a high degree of plasticity which enables it to be easily shaped according to a preset geometry.

The liquid substance 5 may also contain, in a solution or in dispersed form, additives that can give the material 2, once returned to its original state after forming, particular properties: for example additives suitable for increasing the stiffness of the material 2 such as starch, or proofing additives suitable for improving the barrier properties of the material 2, or still again substances suitable for sterilising the material 2, for example H₂O₂ or special powders.

After being humidified and then reaching a high level of deformability, the material 2 enters a forming station 8, comprising a mould 9 suitable for forming the material 2 according to the required shape. The mould 9 is provided with mechanical forming means, comprising a matrix 10 suitable for receiving a portion of material 2 after the latter has been shaped, and a punch 11 suitable for shaping said portion of material 2. The punch 11 is fixed to a rod 12 translatable in the direction indicated by the arrow F2 between a free position, such as the one shown by Figure 1, in which the punch 11 is located above the undeformed material 2, and a work position, not shown, in which the punch 11 deforms the material 2 by pushing it into contact with the walls 13 of a cavity 13a with which the matrix 10 is provided.

The mould 9 is enclosed at the top in a bell 14, inside which a tight chamber 15 is obtained. Furthermore, fluid forming means is associated with the mould 9, which fluid forming means may also comprise pneumatic fluid-forming means, for example a flow of pressurised air that enters the chamber 15 trough a hole 16 made in its top wall, or any other appropriate fluid. The air flow promotes the deformation of the sheet material 2, by pushing it point by point against the walls 13 of the cavity 13a, possibly passing through holes, not shown, that are made in the punch 11.

The pneumatic forming means further comprises air aspirated through a plurality of extracting conduits 16a, which extracting conduits 16a are made in the matrix 10, and are suitable for evacuating air from the cavity 13a by means of an air aspiration or vacuum-creating device that is not shown.

In this way, it is certain that the portion of material 2 to be deformed is arranged in a regular manner between the punch 11 and the matrix 10, without causing wrinkles or other defects.

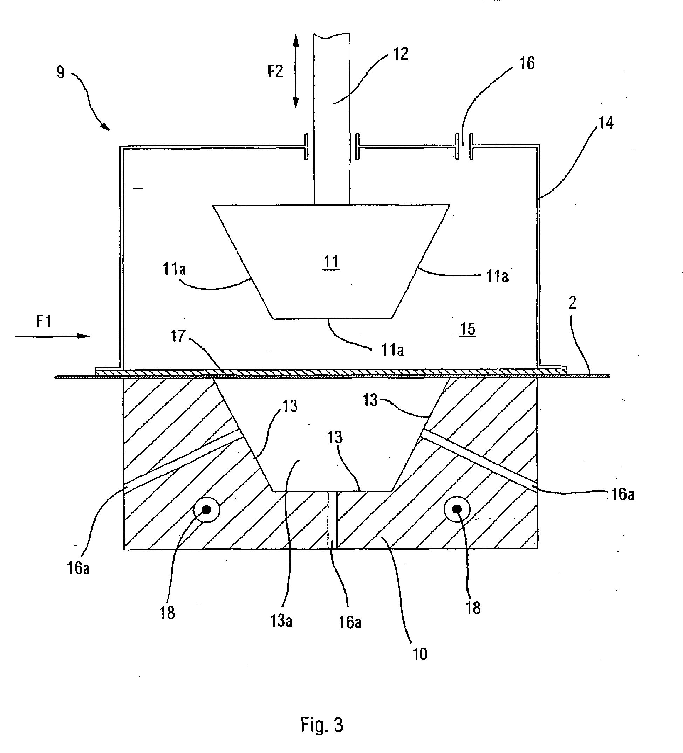

In order to enable the pneumatic forming means to perform its action in the manner described above, as shown in detail in Figure 3, between the sheet material 2 and the bell 15 flow-inhibiting means is interposed comprising a membrane 17 that is substantially impermeable to the air flow or to other fluids. The membrane 17 is fixed to the bell 15 so as to close said bell 15 and is preferably made of plastic material, for example, polyurethane or silicone resin; said plastic material is provided with a thin thickness and marked elastic properties so as to be deformed under the action of the punch 11 and to then return to an undeformed configuration when the punch 11 lifts up from the matrix 10 to go to its free position.

To form the sheet material 2, the punch 11 descends to the work position and deforms the membrane 17, which wraps one or more active surfaces 11a of the punch 11. The flow of pressurised air that enters the chamber 15 through the hole 16, together with the mechanical action of the punch 11, shapes the membrane 17 and with it the material 2. The membrane 17, which push the sheet material 2 to be formed, is promoted to adhere to the cavity 13a of the matrix 10 by the air aspirated through the extracting conduits 16a; in this way the material 2 is induced to take on precisely, point by point, the form of the cavity 13a. The membrane 17 enables the air flow, whether the air flow be pressurised air sent from the chamber 15 or air aspirated through the conduits 16a of the matrix 10, to perform its forming action even when the material 2 to be formed is a porous material, and as such the air flow would tend to traverse it without changing the form thereof. In fact, by interposing itself between the material 2 and the air flow, the membrane 17 acts as a barrier to the latter and by becoming deformed, applies pressure point by point to the material 2.

In the forming station 8 evacuation means is further provided suitable for removing the liquid substance 5 from the material 2 after the latter has been formed. In particular, the evacuating means comprises one or more heating elements, for example resistances 18, suitable for increasing the temperature of the mould 9, and in particular of the matrix 10, to promote the evaporation of the liquid substance 5. By eliminating the liquid substance 5 from the material 2, said material 2 regains consistency and stiffness and maintains the form that it was given inside the mould 9.

The heating elements furthermore acts as activating means for activating any possible additives contained in the liquid substance 5, so allowing said additives to react to perform their function. After forming, opening means for opening the mould 9 is provided, not shown, which enables the material 2 that has been shaped at preset regions 19 to leave the mould 9 and be conveyed towards subsequent stations, for example filling, shearing, and other stations.

The materials based on natural fibres can also be coupled with different types of material, for example film made of plastic material suitable for giving the materials based on natural fibres certain properties, for example barrier properties, or sealing properties, or smoothness properties or other properties.

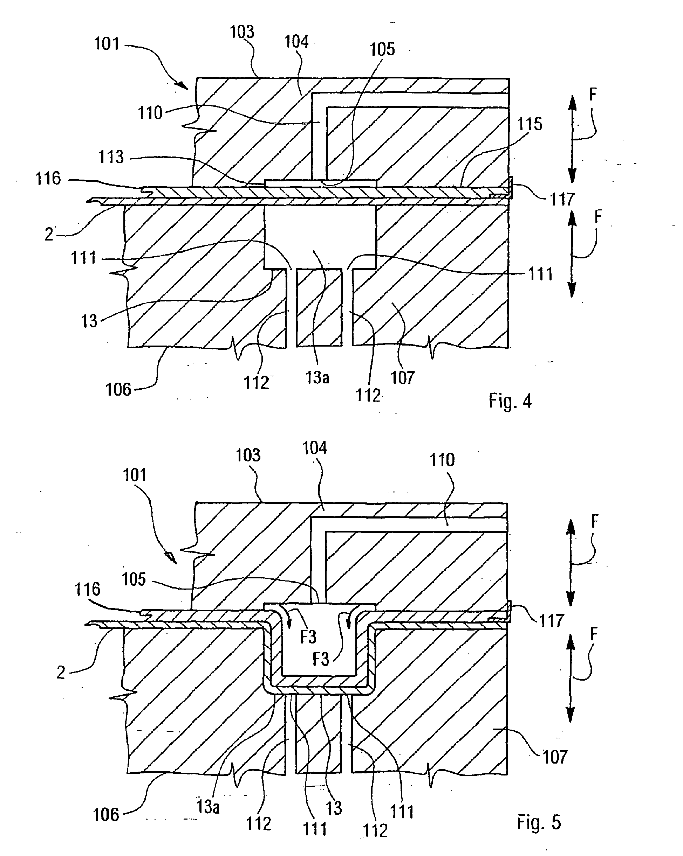

To process the coupled materials, an embodiment of the apparatus according to the invention that is not shown is particularly suitable. Said embodiment provides, upstream the forming station 8, a pre-heating station in which the sheet material is heated to a high temperature so as to cause the softening of the film in plastic material that is coupled with the material based on natural fibres to enable the two components of the coupled sheet to be simultaneously formed. Figures 4 and 5 show forming means 101 suitable for forming a sheet material 2 to obtain container shells.

The forming means 101 comprises a half-mould 103 provided with a body 104 at an active zone 113 of which an opening 105 is defined through which conduit means 110 injects fluid forming means, comprising a pressurised forming fluid arranged for deforming the sheet material 2.

The forming means 101 further comprises a further half-mould 106 provided with a further body 107 in which a cavity 13a is obtained that reproduces the form of the container shells to be obtained and which is arranged for receiving the sheet material 2 to be formed.

On the walls 13 of the cavity 13a further openings are defined 111 connected to a further conduit means 112 through which further forming fluid is aspirated to create a vacuum inside the cavity 13a.

On one face 115 of the body 104 comprising the active zone 113 of the latter membrane means 116 is associated arranged for interacting with the sheet material 2 to induce the sheet material 2 to penetrate the cavity 13a.

The membrane means 116 is made from a material that can be deformed by the action of the forming fluid, said material being impermeable to the forming fluid.

The membrane means 116 can be advantageously made of plastic material, for example of silicone or polyurethane resin. As Figure 4 shows, the membrane means 116 is fixed to the body 104 by frame means 117 that extends along the perimeter of the body 104. The membrane means 116 is, therefore, not anchored to the body 104 at the internal parts thereof, which contributes to increasing the deformability of the membrane means 116 during forming of the sheet material 2.

As Figure 5 shows, in fact, when the membrane means 116 is pressed by the forming fluid, as it is not fixed to inner regions of the face 115, the material that constitutes the portion thereof that is closed between the half-mould 103 and the further half-mould 106 can be drawn towards the cavity 13a, as shown by the arrows F3, so enabling the membrane means 116 to arrange itself in contact with the walls 13, at each of their points.

This enables the sheet material 2 that is interposed between the membrane means 116 and the walls 13 to be precisely arranged according to the shape of the cavity 13a.

The membrane means 116, in the case of forming a sheet material based on plastic material, promotes excellent adhesion of the sheet material to the walls 13.

If the forming means 101 forms a sheet material with a certain porosity, for example a sheet of material based on natural fibres, the membrane means 116 acts as a barrier element to the aforesaid passage of fluid so allowing the sheet material to be formed.

At the active zone 113 of the body 104 a hollow is created 114 that has a plan form that is substantially the same as that of the cavity 13a but has a more limited depth than the latter. In this way the zone of the membrane means 116 subjected to the pressure of the forming fluid has an area that is substantially the same as the section of the cavity 13a, which enables a uniform deformation of the membrane means 116 and better forming action to be obtained.

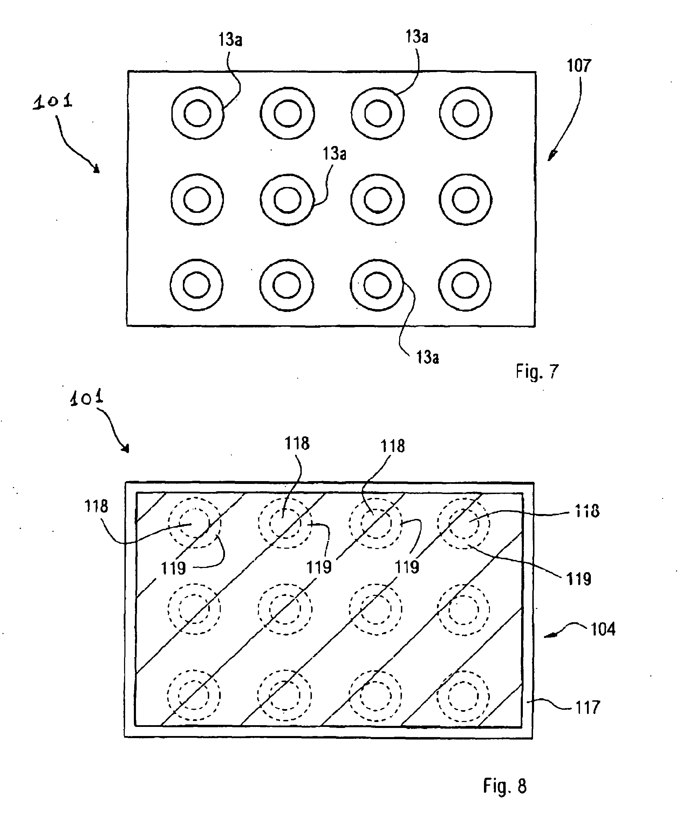

As Figures 7 and 8 show, the forming means 101 can be suitable for simultaneously forming a plurality of container shells from a single film of sheet material 2.

In this case, the further body 107 is provided with a plurality of cavities 13a rather than with just one cavity.

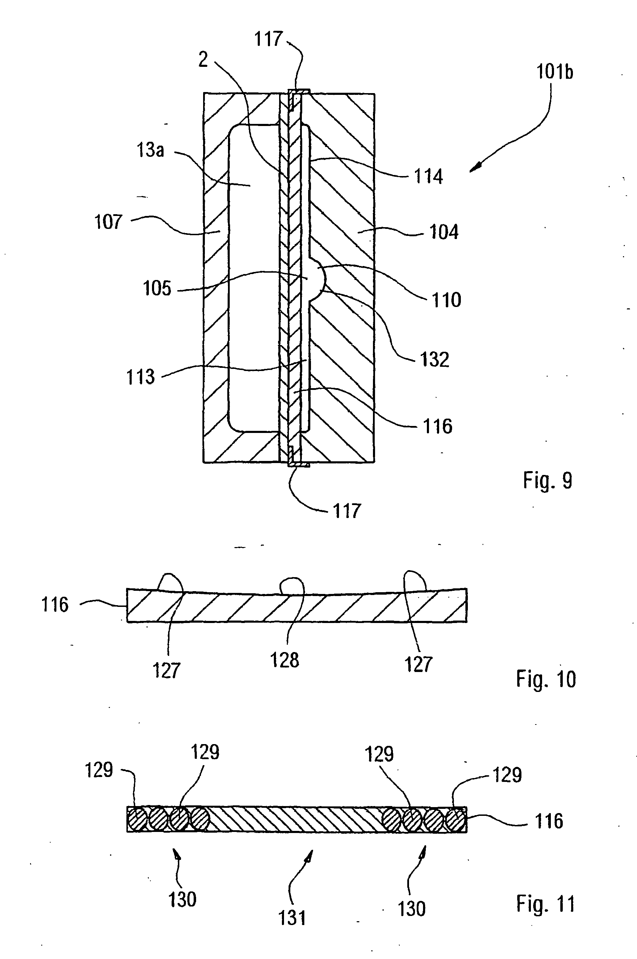

As Figures 10 and 11 show, the membrane means 116 can comprise a lamina of deformable material that is provided with regions with different degrees of deformability.

Said different degrees of deformability can, for example, be obtained by making portions of lamina that have a greater thickness 127 that are placed alongside portions of lamina that have a lesser thickness 128.

Alternatively, the deformability can be controlled by inserting reinforcing fibres 129 inside the membrane means 116 to obtain reinforced portions 130 provided with greater stiffness that alternate with non-reinforced portions 131 provided with lesser stiffness.

Figures 7 and 8 also show the forming means 101 for the production of container shells that have the form of a trunk of a cone, wherein the bottom of the container has a section that is less than that of the mouth of the container.

In such case, in the membrane means regions with greater deformability 118 are identified that are arranged for forming the base of said container shells, and regions with lesser deformability 119 are further identified that are arranged for forming a side wall of said container shells.

In this way, during the forming phase, the bases are obtained first and then the side walls of the container shells, which enables progressive and optimal deformation of the sheet material 2 to be achieved.

The half-mould 103 and the further half-mould 106 are movable towards and away from one another in the direction of the arrows F so as to be able to be transferred from a rest position, in which the container shells obtained can be removed from the cavity 13a and a film of still undeformed sheet material 2 can be interposed between the half-mould 103 and the further half-mould 106, and a work position, in which the half-mould 103 is placed in contact with the half-mould 106 to clamp the sheet material 2.

During operation, when the half-mould 103 and the further half-mould 106 are in the work position, injection means, not shown, transfers the pressurised forming fluid into the hollow 114, through the conduit means 110. The forming fluid therefore deforms the membrane means 116 by inducing the membrane means 116 to penetrate into the cavity 13a.

The membrane means 116, in turn, causes the sheet material 2 to adhere perfectly to the walls 13.

In the meanwhile, aspirating means, not shown, extracts further pressurised fluid from inside the cavity 13a through the further conduit means 112: in this way a vacuum is created that promotes the sheet material 2 to correctly adhere to the walls 13.

Said vacuum furthermore substantially prevents wrinkles and/or folds from forming in the sheet material 2 that could lessen the quality of the formed container shells.

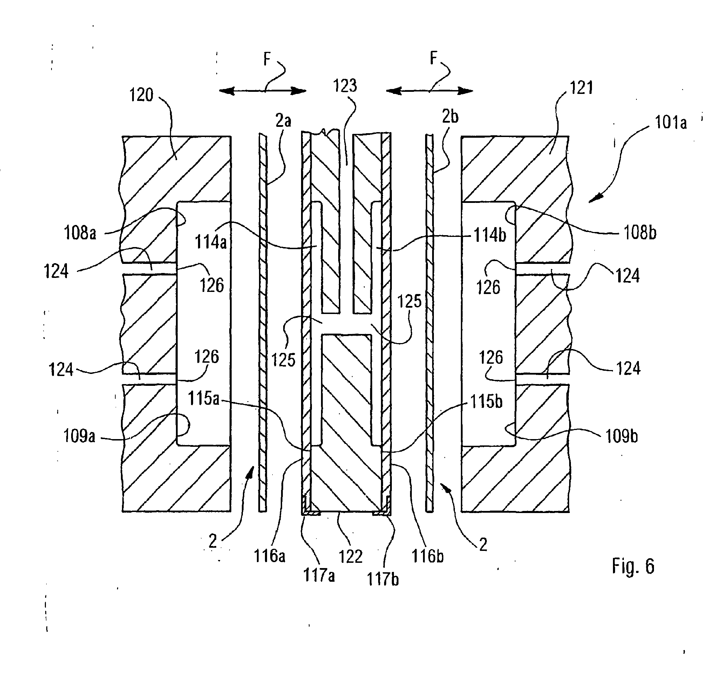

Figure 6 shows a forming means 101a suitable for simultaneously forming a pair of films, or flaps of film, of sheet material 2.

The forming means 101a comprises first matrix means 120 and second matrix means 121 that are respectively provided with a first cavity 108a and a second cavity 108b suitable for receiving a sheet material 2 in the form of a first film 2a and of a second film 2b.

The forming means 101a further comprises plate means 122 cooperating with the first matrix means 120 and with the second matrix means 121 to form a pair of container shells.

The plate means 122 is defined by a first face 115a and by a second face 115b obtained in opposite zones of the plate means 122, the first face 115a being turned towards the first matrix means 120 and the second face 115b being turned towards the second matrix means 121.

The plate means 122 is traversed by inlet conduits 123 of a pressurised forming fluid, which inlet conduits, through inlet openings 125, enter into a first hollow 114a and a second hollow 114b obtained respectively at the first face 115a and the second face 115b.

The first hollow 114a faces the first cavity 108a, and the second hollow 114b faces the second cavity 108b, said first hollow 114a and second hollow 114b having an area that is substantially the same as that of the section of the first cavity 108a and of the second cavity 108b.

A first membrane 116a and a second membrane 116b are associated respectively to the first face 115a and the second face 115b of the plate means 122.

The first membrane 116a and the second membrane 116b are connected to the plate means 122 through a pair of frames 117a, 117b that extend along the perimeter of the first face 115a and of the second face 115b, in such a way that the first membrane 116a and the second membrane 116b are not fixed to the first face 115a and to the second face 115b at internal portions thereof.

During operation, the first membrane 116a and the second membrane 116b, as they are not fixed to the internal points of the first face 115a and of the second face 115b, can be subjected to significant deformations and adhere perfectly to walls 109a, 109b of the first cavity 108a and of the second cavity 108b.

The first matrix means 120 and the second matrix means 121 are traversed by removing conduits 124 that flow inside the first cavity 108a and the second cavity 108b to extract from it, through removing openings 126, the forming fluid by creating a vacuum that promotes the sheet material 2 to adhere to the walls 109a, 109b and to conform according to the shape thereof.

Figure 9 shows the forming means 101b, comprising feeding conduit means 110 for feeding a forming fluid, said feeding conduit means 110 being defined by wall means 132, obtained at the active zone 113 of the body 104, and by the membrane means 116 associated with the active zone 113.

The conduit means 110 defines opening means 105 facing the membrane means 116 and the sheet material 2.

The forming means 101, 101a, 101b can be advantageously used to form any type of thermoformable material.

In particular, when forming a material based on plastic material, upstream the forming means 101, 101a, 101b pre-heating means is advantageously provided that heats the sheet material to a temperature that is close to softening temperature to increase deformability of said sheet material. Furthermore, heating means such as electrical resistances is advantageously associated to the forming means 101, 101a, 101b, which heating means further heats the sheet material 2 to enable the sheet material 2 to be formed.

When forming a material based on natural fibres, upstream the forming means 101, 101a, 101b deformability promoting means may be advantageously provided, in particular, said deformability promoting means may comprise a liquid substance, for example water, sprayed through nozzles onto the sheet material 2 in such a manner as to soften the latter and simplify deformation thereof.

To the forming means 101, 101a, 101b evacuation means can be associated that is arranged for removing the liquid substance from the sheet material once forming has terminated.

The evacuation means can advantageously comprise heating means suitable for promoting the evaporation of the liquid substance.

Further to said evaporation the sheet material regain its original stiffness in such a way that the container shells obtained therefrom are provided with good mechanical resistance.

## Claims

1. Forming means for shaping sheet material (2), comprising fluid forming means suitable for forming portions of said sheet material (2), flow-inhibiting means comprising membrane means (17, 116; 116a, 116b) suitable for preventing said fluid forming means from flowing through said sheet material (2), said membrane means (17, 116; 116a, 116b) being substantially impermeable to said fluid forming means or having properties of low permeability to gaseous substances, **characterised in that** it further comprises mechanical forming means (9, 10, 11) suitable for cooperating with said fluid forming means, said membrane means (17, 116; 116a, 116b) being suitable for wrapping at least one active surface (11a) of punch means (11) with which said mechanical forming means (9, 10, 11) is provided.

2. Forming means according to claim 1, wherein said fluid forming means comprises pneumatic forming means suitable for pneumatically shaping said sheet material (2).

3. Forming mean according to claim 1 or 2, wherein said membrane means (17, 116; 116a, 116b) is made of plastic material.

4. Forming means according to claim 1 to 3, wherein said fluid forming means comprises pressurised fluid means introduced to bell means (14), said bell means (14) being closed by said membrane means (17, 116; 116a, 116b).

5. Forming means according to claim 4, wherein said punch means (11) is contained inside said bell means (14).

6. Forming means according to any one of claims 1 to 5, and further comprising at least one body (104, 107; 120, 121, 122) traversed by conduit means (110, 112; 123, 124) suitable for allowing said fluid forming means to pass therethrough, said conduit means (110, 112; 123, 124) flowing into opening means (105, 111; 125, 126) arranged at forming zone means (113, 115; 115a, 115b) of said at least one body (104, 107; 120, 121, 122), said forming zone means (113, 115; 115a, 115b) being associated to said membrane means (17, 116; 116a, 116b) deformable by said fluid forming means.

7. Forming means according to claim 6, wherein said conduit means (110, 112; 123, 124) is defined by walls that are entirely contained in said at least one body (104, 107; 120, 121, 122).

8. Forming means according to claim 6, or 7, wherein said opening means (105, 111; 125, 126) faces said membrane means (17, 116; 116a, 116b).

9. Forming means according to any one of claims 1 to 8, wherein said membrane means (17, 116; 116a, 116b) comprises lamina means in which zones are defined (127, 128; 130, 131) having different degrees of deformability.

10. Forming means according to claim 9, wherein said zones (127, 128; 130, 131) comprise portions of said lamina means having a greater thickness (127) placed alongside portions of said lamina means having a lesser thickness (128).

11. Forming means according to claim 10, wherein said zones (127, 128; 130, 131) comprise reinforced portions (130) of said reinforced lamina means, that are reinforced by reinforcing fibre elements (129), placed alongside portions of said non-reinforced lamina means (131).

12. Forming means according to any one of claims 6 to 8, or according to any one of claims 9 to 11, as claim 9 is appended to any one of claims 6 to 8, wherein said at least one body (104, 107; 120, 121, 122) comprises a first body (104, 122) in which openings (105; 125) of said opening means (105, 111; 125, 126) are obtained.

13. Forming means according to claim 12, and further comprising injecting means arranged for injecting said fluid forming means through said openings (105; 125).

14. Forming means according to claim 12, or 13, wherein said membrane means (17, 116; 116a, 116b) is fixed peripherally to said first body (104; 122).

15. Forming means according to any one of claims 6 to 8, or according to any one of claims 9 to 11, as claim 9 is appended to any one of claims 6 to 8, or according to any one of claims 12 to 14, wherein said at least one body (104, 107; 120, 121, 122) comprises a further body (107; 120, 121) in which cavity means is defined (13a; 108a, 108b) suitable for receiving said sheet material (2).

16. Forming means according to claim 15, wherein inside said cavity means (13a; 108a, 108b) further openings (111; 126) of said opening means (105, 111; 125, 126) are obtained.

17. Forming means according to claim 16, and further comprising aspirating means arranged to extract said fluid forming means from said cavity (13a; 108a, 108b) through said further openings (111; 126).

18. Forming means according to any one of claims 15 to 17, as appended to any one of claims 12 to 14, wherein said openings (105, 125) are obtained in hollow means (114; 114a, 114b) facing said cavity means (13a; 108a, 108b).

19. Forming means according to claim 18, wherein said hollow means (114; 114a, 114b) has a plan shape that is substantially the same as the plan shape of said cavity means (13a; 108a, 108b).

20. Forming means according to any one of claims 15 to 19, as appended to any one of claims 12 to 14, wherein said first body (104; 122) and said further body (107; 120, 121) are movable towards and away from each other.

21. Forming means according to any preceding claims, and further comprising heating means (18) suitable for heating said sheet material (2).

22. Method for shaping sheet material (2), comprising forming portions of said sheet material (2) through fluid forming means, interposing between said fluid forming means and said sheet material (2) flow-inhibiting means comprising membrane means (17, 116; 116a, 116b) suitable for preventing said fluid forming means from flowing through said sheet material (2), said membrane means (17, 116; 116a, 116b) being substantially impermeable to said fluid forming means or having properties of low permeability to gaseous substances, **characterised in that** said forming comprises deforming said membrane means (17, 116; 116a, 116b) through punch means (11), said membrane means (17, 116; 116a, 116b) wrapping at least an active surface (11a) of said punch means (11).

23. Method according to claim 22, wherein said forming comprises forming said sheet material (2) through pneumatic forming means.

24. Method according to claim 22, or 23, wherein said deforming comprises delivering pressurised fluid means to chamber means (15) closed by said membrane means (17, 116; 116a, 116b).

25. Method according to any one of claims 22 to 24, and further comprising extracting further fluid means from cavity means (13a; 108a, 108b) of matrix means, so as to make said sheet material (2) adhere to said cavity means (13a; 108a, 108b).

26. Method according to any one of claims 22 to 25, and further comprising heating said sheet material (2).

## Patentansprüche

1. Formgebungsmittel zum Formen von Folienmaterial (2), mit einem fluiden Formgebungsmittel, das zum Ausbilden von Teilen des Folienmaterials (2) ausgestaltet ist, einem strömungshemmenden Mittel mit einem Membranmittel (17, 116; 116a, 116b), das dazu ausgebildet ist, das fluide Formgebungsmittel am Durchströmen des Folienmaterials (2) zu hindern, wobei das Membranmittel (17, 116; 116a, 116b) für das fluide Formgebungsmittel im Wesentlichen undurchlässig ist oder eine geringe Durchlässigkeit für gasförmige Substanzen aufweist, **dadurch gekennzeichnet, dass** ferner ein mechanisches Formgebungsmittel (9, 10, 11) vorgesehen ist, das zum Zusammenwirken mit dem fluiden Formgebungsmittel ausgebildet ist, wobei das Membranmittel (17, 116; 116a, 116b) dazu ausgebildet ist, zumindest eine aktive Oberfläche (11a) eines Stempelmittels (11), mit dem das mechanische Formgebungsmittel (9, 10, 11) versehen ist, einzuhüllen.

2. Formgebungsmittel nach Anspruch 1, bei dem das fluide Formgebungsmittel ein pneumatisches Formgebungsmittel aufweist, das zum pneumatischen Formen des Folienmaterials (2) ausgebildet ist.

3. Formgebungsmittel nach Anspruch 1 oder 2, bei dem das Membranmittel (17, 116; 116a, 116b) aus Kunststoffmaterial gefertigt ist.

4. Formgebungsmittel nach Anspruch 1 bis 3, bei dem das fluide Formgebungsmittel ein unter Druck stehendes Fluidmittel aufweist, das in ein Glockenmittel (14) eingeleitet ist, wobei das Glockenmittel (14) durch das Membranmittel (17, 116; 116a, 116b) geschlossen ist.

5. Formgebungsmittel nach Anspruch 4, bei dem das Stempelmittel (11) innerhalb des Glockenmittels (14) aufgenommen ist.

6. Formgebungsmittel nach einem der Ansprüche 1 bis 5, das ferner zumindest einen Körper (104, 107; 120, 121, 122) aufweist, der von einem Leitungsmittel (110, 112; 123, 124) durchzogen ist, das dazu ausgebildet ist, einen Durchgang des fluiden Formgebungsmittels zu ermöglichen, wobei das Leitungsmittel (110, 112; 123, 124) in ein Öffnungsmittel ( 105, 111; 125, 126) mündet, das bei einem Formgebungszonenmittel ( 113, 115; 115a, 115b) des zumindest einen Körpers (104, 107; 120, 121, 122) vorgesehen ist, wobei das Formgebungszonenmittel (113, 115; 115a, 115b) mit dem durch das fluide Formgebungsmittel verformbaren Membranmittel (17, 116; 116a, 116b) verbunden ist.

7. Formgebungsmittel nach Anspruch 6, bei dem das Leitungsmittel (110, 112; 123, 124) durch Wandungen bestimmt ist, die vollständig in dem zumindest einen Körper (104, 107; 120, 121, 122) enthalten sind.

8. Formgebungsmittel nach Anspruch 6 oder 7, bei dem das Öffnungsmittel (105, 111; 125, 126) dem Membranmittel (17, 116; 116a, 116b) zugewandt ist.

9. Formgebungsmittel nach einem der Ansprüche 1 bis 8, bei dem das Membranmittel (17, 116; 116a, 116b) ein Laminatmittel aufweist, in dem Bereiche (127, 128; 130, 131) bestimmt sind, die verschiedene Verformbarkeitsgrade aufweisen.

10. Formgebungsmittel nach Anspruch 9, bei dem die Bereiche (127, 128; 130, 131) Teile des Laminatmittels mit einer größeren Dicke (127) aufweisen, die neben Teilen des Laminatmittels mit einer kleineren Dicke (128) angeordnet sind.

11. Formgebungsmittel nach Anspruch 10, bei dem die Bereiche (127, 128; 130, 131) verstärkte Teile (130) des verstärkten Laminatmittels aufweisen, die durch verstärkende Faserelemente (129) verstärkt sind, die neben Teilen des nicht verstärkten Laminatmittels (131) angeordnet sind.

12. Formgebungsmittel nach einem der Ansprüche 6 bis 8, oder nach einem der Ansprüche 9 bis 11, sofern Anspruch 9 auf einen der Ansprüche 6 bis 8 rückbezogen ist, bei dem der zumindest eine Körper (104, 107; 120, 121, 122) einen ersten Körper (104, 122) aufweist, in dem Öffnungen (105; 125) des Öffnungsmittels (105, 111; 125, 126) vorgesehen sind.

13. Formgebungsmittel nach Anspruch 12, das ferner ein Injiziermittel aufweist, das zum Injizieren des fluiden Formgebungsmittels durch die Öffnungen (105; 125) vorgesehen ist.

14. Formgebungsmittel nach Anspruch 12 oder 13, bei dem das Membranmittel (17, 116; 116a, 116b) umfangsseitig am ersten Körper (104; 122) festgelegt ist.

15. Formgebungsmittel nach einem der Ansprüche 6 bis 8, oder nach einem der Ansprüche 9 bis 11, sofern Anspruch 9 auf einen der Ansprüche 6 bis 8 rückbezogen ist, oder nach einem der Ansprüche 12 bis 14, bei dem der zumindest eine Körper (104, 107; 120, 121, 122) einen weiteren Körper (107; 120, 121) aufweist, in dem ein Hohlraummittel (13a; 108a, 108b) definiert ist, das zur Aufnahme der Folienmaterials (2) ausgebildet ist.

16. Formgebungsmittel nach Anspruch 15, bei dem innerhalb des Hohlraummittels (13a; 108a, 108b) weitere Öffnungen (111; 126) des Öffnungsmittels (105, 111; 125, 126) vorgesehen sind.

17. Formgebungsmittel nach Anspruch 16, das ferner ein Aspirationsmittel aufweist, das dazu ausgestaltet ist, das fluide Formgebungsmittel durch die weiteren Öffnungen (111; 126) aus dem Hohlraum (13a; 108a, 108b) zu entnehmen.

18. Formgebungsmittel nach einem der Ansprüche 15 bis 17, sofern sie auf einen der Ansprüche 12 bis 14 rückbezogen sind, bei dem die Öffnungen (105, 125) in einem Aussparungsmittel (114; 114a, 114b) vorgesehen sind, das dem Hohlraummittel (13a; 108a, 108b) zugewandt ist.

19. Formgebungsmittel nach Anspruch 18, bei dem das Aussparungsmittel (114; 114a, 114b) eine ebene Gestalt aufweist, die im Wesentlichen der ebenen Gestalt des Hohlraummittels (13a; 108a, 108b) entspricht.

20. Formgebungsmittel nach einem der Ansprüche 15 bis 19, sofern sie auf einen der Ansprüche 12 bis 14 rückbezogen sind, bei dem der erste Körper (104; 122) und der weitere Körper (107; 120, 121) aufeinander zu und voneinander weg bewegbar sind.

21. Formgebungsmittel nach einem der vorhergehenden Ansprüche, das ferner ein Heizmittel (18) zum Erwärmen des Folienmaterials (2) aufweist.

22. Verfahren zum Formen von Folienmaterial (2), aufweisend ein Ausbilden von Teilen des Folienmaterials (2) durch ein fluides Formgebungsmittel, ein Anordnen eines strömungshemmenden Mittels mit einem Membranmittel (17, 116; 116a, 116b), das dazu ausgebildet ist, das fluide Formgebungsmittel am Durchströmen des Folienmaterials (2) zu hindern, zwischen dem fluiden Formgebungsmittel und dem Folienmaterial (2), wobei das Membranmittel (17, 11b; 116a, 116b) für das fluide Formgebungsmittel im Wesentlichen undurchlässig ist oder eine geringe Durchlässigkeit für gasförmige Substanzen aufweist, **dadurch gekennzeichnet, dass** das Ausbilden ein Deformieren des Membranmittels (17, 116; 116a, 116b) durch ein Stempelmittel (11) aufweist, wobei das Membranmittel (17, 116; 116a, 116b) zumindest eine aktive Oberfläche (11a) des Stempelmittels (11) einhüllt.

23. Verfahren nach Anspruch 22, bei dem das Ausbilden das Ausbilden des Folienmaterials (2) mittels eines pneumatischen Formgebungsmittels aufweist.

24. Verfahren nach Anspruch 22 oder 23, bei dem das Deformieren ein Fördern eines unter Druck stehenden Fluidmittels in ein Kammermittel (15) aufweist, das durch das Membranmittel (17, 116; 116a, 116b) geschlossen ist.

25. Verfahren nach einem der Ansprüche 22 bis 24, das ferner ein Entnehmen eines weiteren Fluidmittels aus einem Hohlraummittel (13a; 108a, 108b) eines Matrixmittels aufweist, um das Folienmaterial (2) am Hohlraummittel (13a; 108a, 108b) anhaften zu lassen.

26. Verfahren nach einem der Ansprüche 22 bis 25, das ferner ein Erwärmen des Folienmaterials (2) aufweist.

## Revendications

1. Moyens de formage pour façonner un matériau (2) en feuille, comprenant des moyens de formage par fluide aptes à former des portions dudit matériau en feuille (2), des moyens d'inhibition de l'écoulement comprenant des moyens de membrane (17, 116 ; 116a, 116b) aptes à empêcher lesdits moyens de formage par fluide de s'écouler à travers ledit matériau en feuille (2), lesdits moyens de membrane (17, 116 ; 116a, 116b) étant sensiblement imperméables auxdits moyens de formage par fluide ou possédant des propriétés de faible perméabilité aux substances gazeuses, ***caractérisés en ce qu'**ils* comprennent de plus des moyens de formage mécanique (9, 10, 11) aptes à coopérer avec lesdits moyens de formage par fluide, lesdits moyens de membrane (17, 116 ; 116a, 116b) étant aptes à envelopper au moins une surface active (11a) de moyens de poinçon (11) dont sont munis lesdits moyens de formage mécaniques (9, 10, 11).

2. Moyens de formage selon la revendication 1, dans lesquels lesdits moyens de formage comprennent des moyens de formage pneumatiques aptes à façonner par voie pneumatique ledit matériau en feuille (2).

3. Moyens de formage selon la revendication 1 ou 2, dans lesquels lesdits moyens de membrane (17, 116 ; 116a, 116b) sont faits de matière plastique.

4. Moyens de formage selon les revendications 1 à 3, dans lesquels lesdits moyens de formage par fluide comprennent des moyens de fluide sous pression introduits dans des moyens de cloche (14), lesdits moyens de cloche (14) étant fermés par lesdits moyens de membrane (17, 116 ; 116a, 116b).

5. Moyens de formage selon la revendication 4, dans lesquels lesdits moyens de poinçon (11) sont contenus à l'intérieur desdits moyens de cloche (14).

6. Moyens de formage selon l'une quelconque des revendications 1 à 5, et comprenant de plus au moins un corps (104, 107 ; 120, 121, 122) traversé par des moyens de conduit (110, 112 ; 123, 124) aptes à permettre auxdits moyens de formage par fluide de passer, lesdits moyens de conduit (110, 112 ; 123, 124) débouchant dans des moyens d'ouverture (105, 111 ; 125, 126) placés au niveau de moyens de zone de formage (113, 115 ; 115a, 115b) dudit au moins un corps (104, 107 ; 120, 121, 122), lesdits moyens de zone de formage (113, 115 ; 115a, 115b) étant associés auxdits moyens de membrane (17, 116 ; 116a, 116b) déformables par lesdits moyens de formage par fluide.

7. Moyens de formage selon la revendication 6, dans lesquels lesdits moyens de conduit (110, 112 ; 123, 124) sont définis par des parois qui sont entièrement contenus dans ledit au moins un corps (104, 107 ; 120, 121, 122).

8. Moyens de formage selon la revendication 6 ou 7, dans lesquels lesdits moyens d'ouverture (105, 111 ; 125, 126) font face auxdits moyens de membrane (17, 116 ; 116a, 116b).

9. Moyens de formage selon l'une quelconque des revendications 1 à 8, dans lesquels lesdits moyens de membrane (17, 116 ; 116a, 116b) comprennent des moyens de lamelles dans lesquels des zones sont définies (127, 128 ; 130, 131) ayant des degrés de déformabilité différents.

10. Moyens de formage selon la revendication 9, dans lesquels lesdites zones (127, 128 ; 130, 131) comprennent des portions desdits moyens de lamelles ayant une épaisseur plus importante (127) placés le long de portions desdits moyens de lamelle ayant une moindre épaisseur (128).

11. Moyens de formage selon la revendication 10, dans lesquels lesdites zones (127, 128 ; 130, 131) comprennent des portions renforcées (130) desdits moyens de lamelles renforcés, qui sont renforcées par des éléments de fibre de renfort (129) placés le long de portions desdits moyens de lamelle non renforcés (131).

12. Moyens de formage selon l'une quelconque des revendications 6 à 8, ou selon l'une quelconque des revendications 9 à 11, lorsque la revendication 9 est dépendante de l'une quelconque des revendications 6 à 8, dans lesquels ledit au moins un corps (104, 107 ; 120, 121, 122) comprend un premier corps (104, 122) dans lequel sont ménagées des ouvertures (105 ; 125) desdits moyens d'ouverture (105, 111 ; 125, 126).

13. Moyens de formage selon la revendication 12, et comprenant de plus des moyens d'injection prévus pour injecter lesdits moyens de formage par fluide dans lesdites ouvertures (105 ; 125).

14. Moyens de formage selon la revendication 12 ou 13, dans lesquels lesdits moyens de membrane (17, 116 ; 116a, 116b) sont fixés de manière périphérique sur ledit premier corps (104 ; 122).

15. Moyens de formage selon l'une quelconque des revendications 6 à 8, ou selon l'une quelconque des revendications 9 à 11, lorsque la revendication 9 est dépendante de l'une quelconque des revendications 6 à 8, ou selon l'une quelconque des revendications 12 à 14, dans lesquels ledit au moins un corps (104, 107 ; 120, 121, 122) comprend un autre corps (107 ; 120, 121) dans lequel des moyens de cavité sont définis (13a ; 108a, 108b) aptes à recevoir ledit matériau en feuille (2).

16. Moyens de formage selon la revendication 15, dans lequel, à l'intérieur desdits moyens de cavité (13a, 108a, 108b), des ouvertures supplémentaires (111 ; 126) desdits moyens d'ouverture (105, 111 ; 125, 126) sont ménagées.

17. Moyens de formage selon la revendication 16, et comprenant de plus des moyens d'aspiration prévus pour extraire lesdits moyens de formage par fluide de ladite cavité (13a, 108a, 108b) par lesdites ouvertures supplémentaires (111 ; 126).

18. Moyens de formage selon l'une quelconque des revendications 15 à 17, lorsqu'elles sont dépendantes de l'une quelconque des revendications 12 à 14, dans lesquels lesdites ouvertures (105, 125) sont ménagées dans des moyens de creux (114 ; 114a, 114b) faisant face auxdits moyens de cavité (13a ; 108a, 108b).

19. Moyens de formage selon la revendication 18, dans lesquels lesdits moyens de creux (114 ; 114a, 114b) ont une forme en plan qui est sensiblement la même que la forme en plan desdits moyens de cavité (13a ; 108a, 108b).

20. Moyens de formage selon l'une quelconque des revendications 15 à 19, lorsqu'elles sont dépendantes de l'une quelconque des revendications 12 à 14, dans lesquels ledit premier corps (104 ; 122) et ledit corps supplémentaire (107 ; 120, 121) sont déplaçables l'un par rapport à l'autre.

21. Moyens de formage selon l'une quelconque des revendications précédentes, et comprenant de plus des moyens de chauffage (18) aptes à chauffer ledit matériau en feuille (2).

22. Procédé de façonnage de matériau en feuille (2), comprenant le formage de portions dudit matériau en feuille (2) par des moyens de formage par fluide, l'interposition, entre lesdits moyens de formage par fluide et ledit matériau en feuille (2), de moyens d'inhibition de l'écoulement comprenant des moyens de membrane (17, 116 ; 116a, 116b) aptes à empêcher lesdits moyens de formage par fluide de s'écouler à travers ledit matériau en feuille (2), lesdits moyens de membrane (17, 116 ; 116a, 116b) étant sensiblement imperméables auxdits moyens de formage par fluide ou possédant des propriétés de faible perméabilité aux substances gazeuses, ***caractérisé en ce que*** ledit formage comprend la déformation desdits moyens de membrane (17, 116 ; 116a, 116b) par l'intermédiaire de moyens de poinçon (11), lesdits moyens de membrane (17, 116 ; 116a, 116b) enveloppant au moins une surface active (11a) desdits moyens de poinçon (11).

23. Procédé selon la revendication 22, dans lequel ledit formage comprend le formage dudit matériau en feuille (2) par des moyens de formage pneumatiques.

24. Procédé selon la revendication 22 ou 23, dans lequel ladite déformation comprend la fourniture de moyens de fluide sous pression à des moyens de chambre (15) fermés par lesdits moyens de membrane (17, 116 ; 116a, 116b).

25. Procédé selon l'une quelconque des revendications 22 à 24, et comprenant de plus l'extraction de moyens de fluide supplémentaires hors de moyens de cavité (13a ; 108a, 108b) de moyens de matrice, afin de faire adhérer ledit matériau en feuille (2) auxdits moyens de cavité (13a ; 108a, 108b).

26. Procédé selon l'une quelconque des revendications 22 à 25, et comprenant de plus le chauffage dudit matériau en feuille (2).
